# EUROPEAN PATENT APPLICATION

(11) **EP 3 418 242 A1**
(43) Date of publication of application: **26.12.2018**
(21) Application number: 17177148.8
(22) Date of filing: 21.06.2017
(51) Int. Cl.: B66B 11/04, H02K 41/03

(54) **MOVER OF AN ELECTRIC LINEAR MOTOR FOR AN ELEVATOR AND AN ELEVATOR**

(71) Applicant: KONE Corporation, 00330 Helsinki (FI)
(72) Inventor: HAKALA, Tero, 00330 HELSINKI (FI); PUROSTO, Tero, 00330 HELSINKI (FI); KELA, Jarmo, 03300 HELSINKI (FI)
(74) Representative: Berggren Oy, Helsinki & Oulu

(57) **Abstract**

A mover (16) of an electric linear motor suitable for an elevator (100) and the elevator (100) utilizing such a mover (16) are presented. The mover (16) comprises at least one mover segment (16A-16D) coupled to at least one support portion (23) of the mover (16), and wherein the at least one mover segment (16A-16D) comprises a body part (54) and at least one tension pin (52) arranged to extend through the at least one mover segment (16A-16D) and arranged pre-tensioned for providing support against deformation of the mover (16) affecting a magnitude of an air gap (31) between the at least one mover segment (16A-16D) and at least one stator (15; 15A-15D) of the electric linear motor.

## Description

### TECHNICAL FIELD

The invention concerns in general the technical field of elevators. The invention concerns especially, however, not exclusively, elevators utilizing electric linear motors and, particularly, movers thereof.

### BACKGROUND

At the present time, the elevators utilizing electric linear motors are being developed. The movement of the elevator car is produced by the mover in electromagnetic engagement with the stator of the electric linear motor. The mover is arranged to be moved along the stator which is being arranged in fixed manner with respect to the environment, that is, the elevator shaft.

The operation of the electric linear motors is designed to be controlled such that there is a gap between the mover and the stator in order to move these elements with respect to each other in linear manner. This is the basic principle of electric linear motors. The objective of the control is thus to "levitate" the mover with respect to the stator by utilizing magnetic field between the mover and the stator.

Magnetic field circulating between the mover and the stator causes a normal force component which is perpendicular relative to movement direction of the mover along the stator. In addition to the normal force component, a tangential force component is required for moving the mover in the movement direction. In order to produce steady levitation, the normal force component should be produced essentially along the whole length of the mover.

In some known attempts, the normal force component, which is used for levitating the mover, loads the mover and thus affects the magnitude of the air gap between the mover and the stator when the mover bends due to the loading by the normal force. The bending makes the controlling of the levitation difficult as the normal force component may affect the mover differently at different positions of the mover, for example, with respect to the positions at which the mover has been attached to the elevator car.

There is thus a need to develop a mover of an electric linear motor which facilitates the controlling of the levitation of the mover.

### SUMMARY

An objective of the present invention is to provide a mover of an electric linear motor for an elevator, and an elevator. Another objective of the present invention is that the mover facilitates the controlling of the magnitude of air gap between the mover and stator of the electric linear motor.

The objectives of the invention are reached by a mover and an elevator as defined by the respective independent claims.

According to a first aspect, a mover of an electric linear motor suitable, for example, for an elevator, is provided. The mover comprises at least one mover segment coupled to at least one support portion of the mover. The at least one mover segment comprises a body part and at least one tension pin arranged to extend through the at least one mover segment and arranged pre-tensioned for providing support against deformation of the mover affecting a magnitude of an air gap between the at least one mover segment and at least one stator of the electric linear motor.

There may be two support portions which are arranged at opposite ends of the mover segment.

Mover and/or stator cores may preferably be of ferromagnetic material.

The mover segment may comprise two parallel tension pins.

The mover segment may comprise at least one cooling pipe extending through the mover segment and coupled to the at least one support portion.

The body part may be of composite material, such as carbon or glass fibre material.

The mover segment may comprise at least four parallel cooling pipes coupled to two support portions on opposite ends of the mover.

The mover may comprise at least two mover segments on opposite sides of a stator beam. The stator beam may comprise at least two stators on opposite sides of the stator beam facing said at least two mover segments.

The body part of the at least one mover segment may be crowned for providing support against deformation of the mover or a back of a ferromagnetic core of the mover.

The at least one support portion may be a flange to which each one of the mover segments may be coupled to.

The mover may comprise least two support portions. Said at least two support portions may be flanges arranged at first and second ends of the mover.

The mover may comprise at least one unit of electromagnetic components in each one of the mover segments.

According to a second aspect, an elevator comprises at least one mover according to the first aspect is provided. The elevator further comprises at least one stator beam along which the at least mover is configured to be moved along. The mover is coupled to an elevator car and the stator beam is coupled in fixed manner to an elevator shaft in which the elevator car is arranged to be moved by the electric linear motor.

The elevator may comprise at least two movers according to the first aspect and at least two stator beams, wherein each one of said movers is arranged to be moved along the respective stator beam.

The present invention provides a mover of an electric linear motor for an elevator and an elevator thereof. The mover provides advantages over known solutions such that the mover facilitates to controlling of the magnitude of air gap between the mover and the stator beam by minimizing or at least reducing the amount of bending or deformation of the mover due to the normal force affecting the mover segments when in electromagnetic engagement with the stator.

Various other advantages will become clear to a skilled person based on the following detailed description.

The expression "a plurality of" refers herein to any positive integer starting from two, e.g. to two, three, or four.

The terms "first" and "second" do not denote any order, quantity, or importance, but rather are used to distinguish one element from another.

The exemplary embodiments of the present invention presented herein are not to be interpreted to pose limitations to the applicability of the appended claims. The verb "to comprise" is used herein as an open limitation that does not exclude the existence of also un-recited features. The features recited in depending claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

The embodiments of the present invention are illustrated by way of example, however, not by way of limitation, in the figures of the accompanying drawings.
Figure 1 illustrates schematically an elevator according to an embodiment of the present invention.
Figures 2A and 2B illustrate schematically parts of an electric linear motor according to an embodiment of the present invention.
Figure 3 illustrates schematically parts of an electric linear motor according to an embodiment of the present invention.
Figure 4 illustrates schematically parts of an electric linear motor according to an embodiment of the present invention.
Figure 5 illustrates schematically a mover according to an embodiment of the present invention.
Figure 6 illustrates schematically a mover according to an embodiment of the present invention.

### DESCRIPTION OF SOME EMBODIMENTS

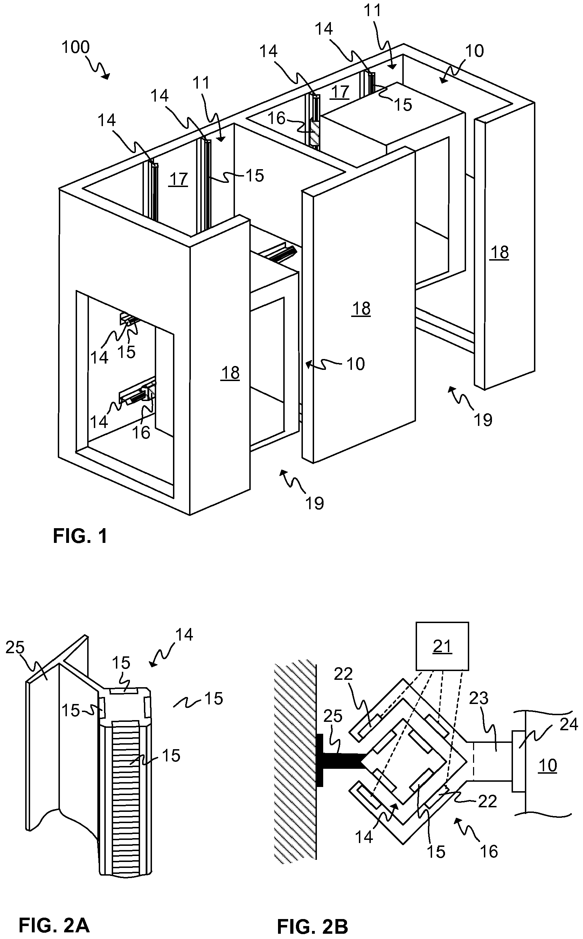

Figure 1 illustrates schematically a part of an elevator 100 according to an embodiment of the present invention. There are two elevator cars 10 configured to be moved in the elevator shaft 11 by an electric linear motor. The electric linear motor comprises a stator 15 or stators 15 comprised in a stator beam 14 or beams 14, in this case two. A stator beam 14 may be arranged vertically or horizontally, that is, in Fig. 1 the elevator 100 comprises vertical stator beams 14 and horizontal stator beams 14. However, the stator beam 14 or beams 14 may also be arranged to any direction(s) in which the elevator car 10 is desired to be moved. One stator beam 14 may, preferably, be comprised of a plurality of stator beam parts arranged one after another to yield the desired length for the stator beam 14 in whole.

The electric linear motor further comprises a mover 16 or movers 16 arranged or coupled to the elevator car 10 or cars 10. The mover 16 or movers 16 are arranged to be in electromagnetic engagement with the stator 15 or stators 15 comprised in the stator beam 14 along which the mover 16 is configured to be moved, thus enabling the movement of the elevator car 10 with which the mover 16 has been mechanically coupled with.

In Fig. 1, the stator beams 14 are arranged to the back wall 17 of the elevator shaft 11. It should be noted, however, that the elevator shaft 11 refers herein to the elevator car pathway which, as described above, may include vertical parts, horizontal parts, and/or parts having a third direction different with respect to vertical and horizontal directions. For example, the part of the elevator shaft 11 depicted in Fig. 1 essentially comprises two vertical parts and one horizontal part. In Fig. 1, the elevator shaft 11 or the elevator car pathway 11 further comprises a front wall 18. The front wall 18 may, preferably, comprise an opening 19 for entering into the elevator car 10 or cars 10. Although shown in Fig. 1 that the opening 19 for entering the elevator cars 10 is arranged only at vertical parts of the elevator shaft 11, the opening 19 may as well be arranged to the horizontal part or any part of the elevator shaft 11. It should be noted, however, that the elevator shaft 10 may in some cases comprise only one wall or a structure arranged to accommodate the necessary equipment such as the stator beam 14. Thus, the elevator shaft 11 or the elevator car pathway 11 does not necessarily have to define a substantially closed volume, that is, surrounded by wall elements or glass or any other structures as long as there is at least a support structure to support the stator beam(s) 14.

The elevators 100, or particularly the elevator shaft 11 or shafts 11 thereof, according to the various embodiments of the present invention may comprise at least one, however, preferably more than one, positions for changing the direction of movement of the elevator car 10 at which the direction of movement of an elevator car 10 may be changed from one direction to another, which said another is un-parallel relative to said one direction, for example, such as when changing the direction between the vertical and horizontal directions.

Figure 2A illustrates schematically a part of the stator beam 14, or a stator beam part, according to an embodiment of the present invention by a perspective view. The part of the stator beam 14 comprises at least one stator 15 extending substantially along the whole stator beam 14. There may, advantageously, be four stators 15 arranged at all four sides of the stator beam 14. There may also be a fastening portion 25 or portions 25 by which said part 14 may be attached in fixed manner to the structures, such as a wall, of the elevator shaft 11. The fastening portion 25 may also be a separate fastening portion 25 which may then be attached to the stator beam 14 for arranging the stator beam 14 into the elevator shaft 11 or may be an integrated part of the stator beam 14 or a part thereof. The stators 15 may, preferably, be of ferromagnetic material and comprise teeth on their outer surface. According to a preferable embodiment of the present invention, the stator beam 14 or beams 14 are passive in the sense that they do not comprise controllable elements or components, such as coils, for controlling the movement of the mover 16 along the stator beam 14. The stator beam 14 or beams 14 may still, however, comprise such active elements as elements utilized for aligning two parts of the stator beam 14 with respect to each other, such as, for example, a dowel or a pin.

Figure 2B illustrates schematically an electric linear motor, or at least a part thereof, according to an embodiment of the present invention. The electric linear motor comprises a mover 16, preferably, a C-shaped or U-shaped (not shown) mover 16. The mover 16 comprises at least one unit of electromagnetic components 22 comprising at least one of coil and, optionally, preferably, permanent magnet(s) and/or magnetic core element(s) or ferromagnetic material. The unit 22 or units of electromagnetic components 22 are, preferably, comprised in the mover 16 and adapted to face the stator 15 or stators 15 of the stator beam 14, as shown in Fig. 2B, for instance. The units of electromagnetic components 22 are arranged to be in electromagnetic engagement with the stators 15 for moving the mover 16 along the stator beam 14. There may also be a support portion 23 by which mover 16 may be attached or coupled to the elevator car 10, for example, to the back wall of the car 10. As can be seen, the mover 16 may be shaped and designed in such a way as to enable the movement of the mover 16 along the stator beam 14 without interference from the fastening or support portions 25, 23. There may, furthermore, be further support portions 24 utilized to attach the mover 16 to the elevator car 10.

The movement of the mover 16 along the stator beam 14 may be implemented by known control methods, such as, field-oriented or vector control or the like. The basic idea is to produce an alternating magnetic field, for example by an electrical drive 21, by injecting current to a unit of electromagnetic components 22 of the mover 16, such as to a winding or coil thereof. The unit of electromagnetic components 22 facing the stator 15 then co-acts with the stator 15 through the electromagnetic engagement and produces a force which moves the mover 16 and thus the elevator car 10 along the stator beam 14. However, permanent magnets may preferably be utilized in addition to the coils, especially, for controlling the levitation of the mover 16 on the stator beam 14.

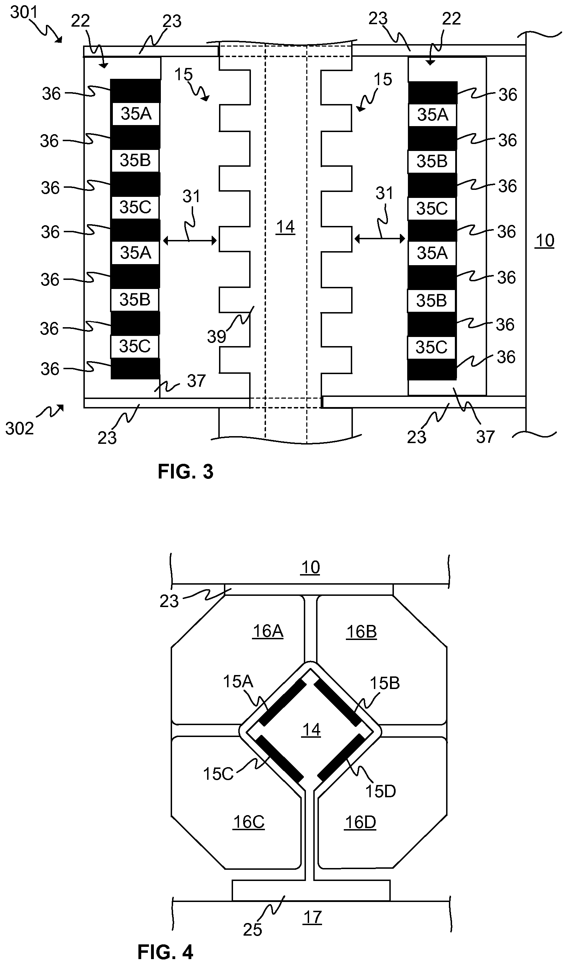

Figure 3 illustrates schematically an electric linear motor, or at least a part thereof, according to an embodiment of the present invention. The stator beam 14 comprises stators 15 on opposite sides of the stator beam 14. The stators 15 comprise stator teeth having a distance between two consecutive teeth. The mover 16 comprises units of electromagnetic components 22 arranged to face the stators 15 of the stator beam 14 and configured to establish an electromagnetic engagement between said units 22 and stators 15, preferably, over an air gap 31 to enable movement of the mover 16 with respect to the stator beam 14. The core 39 of the stator(s) 15 may preferably be of ferromagnetic material. Furthermore, the core 37 of the mover 16 may preferably be of ferromagnetic material.

The mover 16 preferably comprises coils 35A-35C comprised in the units of electromagnetic components 22 that may be arranged around, for example, magnetic teeth arranged to the armature of the mover 16. In this case, each one of said units 22 comprises coils 35A-35C, for example for three-phase current injection by an electrical drive 21, and, optionally, preferably permanent magnets 36 and/or ferromagnetic material 37 or mover irons 37, that is, being at least part of or the complete core 37. There may, alternatively, be more or fewer coils. The coils 35A-35C may be controlled, for example, so as to inject three-phase current having a phase shift of 120 degrees between two phases. The coils 35A-35C may be controlled, as stated hereinbefore, by an electrical drive 21 such as a frequency converter or an inverter. If an electrical energy storage, such as a battery, coupled to the elevator car 10 is being utilized, the electrical drive 21 may draw electrical power from the storage to convert the direct current (DC) of the battery to suitable AC for the mover 16 to be moved along the stator beam 14.

As can be seen in Fig. 3, at least the coils 35A-35C, however, also the permanent magnets 36, if any, produce a significant magnetic force between the units of electromagnetic components 22 and the stators 15 of the stator beam 14, that is, especially the normal force component, when the mover 16 is being levitated. If the mover 16 is, for example, attached to the elevator car 10 from both ends of the mover 16, that is, from the first 301 and second 302 ends by support portions 23, the mover 16 bends more at the relative to the ends from which it has been attached to the elevator car 10. This will affect the magnitude of the air gap 31 between the stator(s) 15 and parts of the movers 16, thus making the controlling of the levitation more difficult.

Figure 4 illustrates a mover 16 of the electric linear motor according to an embodiment of the present invention by a cross-sectional view from the longitudinal direction of the stator beam 14, for example, from above or below in case of an elevator car 10 configured to be moved upwards and downwards. The mover 16 comprises four mover segments 16A-16D. The mover segments 16A-16D may be independently controllable by electrical drives 21 or they may, at least partly, for example, in case of opposite segments 16A and 16D, or 16B and 16C, be controlled by one electrical drive 21. The stator beam 14 is preferably essentially surrounded by the mover 16 along the length of the mover 16, notwithstanding the opening for the fastening portion 25 of the stator beam 14. As is clear, the mover 16 is typically much shorter than the stator beam 14 which extends essentially along the whole elevator shaft 11 while the mover 16 is wholly in the vicinity of the elevator car 10. Although not shown in Fig. 4, each one of the mover segments 16A-16D comprises a unit of electromagnetic components 22 arranged to face the corresponding stator 15A-15D for establishing an electromagnetic engagement between said unit 22 and said stator 15A-15D for controlling the levitation and movement of the mover 16 along the stator beam 14.

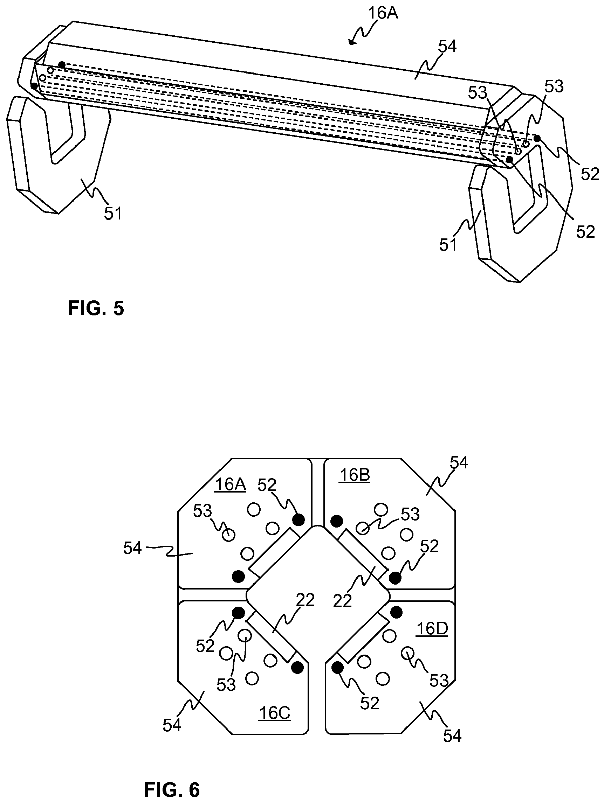

Figure 5 further illustrates one of the mover segments 16A of mover 16 according to an embodiment of the present invention. As can be seen, there may be support portions 23, such as flanges 51, attached to both ends 301, 302 of the mover segment 16A in question. The stator beam 14 has been omitted from the figure for clarity reasons. The unit of electromagnetic components 22 comprised in the mover segment 16A may preferably be arranged close to the side on which the stator beam 14 is extending for establishing a proper electromagnetic engagement between these elements, basically a magnetic circuit of the electric linear motor.

In Fig. 5, the mover segment 16A comprises a, preferably rigid, body part 54, two parallel tension pins 52, such as two chromium pins 52, which extend through the mover segment 16 near the unit of the electromagnetic components 22, especially the motor coils 35A-35C and close to the air gap 31 and are attached or coupled to the flanges 51 or the support portions 23 of the mover 16. It should, however, be noted that there could also be only one tension pin 52 or three 52 or four tension pins 52. These tension pins 52 may preferably be arranged to provide support for the mover segment 16A-16D in order to minimize the bending of the mover segment 16A-16D due to the normal force component by pre-stressing or pre-tensioning said pins 52 against the flanges 51 or support portions 23. There may preferably also be cooling pipes 53, such as of aluminium, arranged substantially parallel with the tension pins 52. The cooling pipes 53 may preferably be water or liquid cooling pipes 53 designed to remove heat from the mover 16 and/or from the electrical drive 21, such as a frequency converter, mounted on the mover 16. The cooling pipes 53 may provide further support to the mover segment 16 against the normal force components. The cooling pipes 53 may be coupled to the support portions 23.

The tension pin 52 or pins 52 may preferably be arranged to extend within the potting, if any, of the mover segment 16. For example, the components of the unit of electromagnetic components 22 may be potted, and the tension pin(s) 52 may be arranged to extend within that potting.

Figure 6 illustrates a mover 16 comprising four mover segments 16A-16D according to an embodiment of the present invention by a sectional view from end of the mover 16, that is, similarly as in Fig. 4. Each segment 16A-16D comprises two tension pins 52 and four cooling pipes 53 extending through the mover 16 in similar manner as shown in Fig. 5. Preferably, each of the mover segments 16A-16D may be coupled to a support portion 23, such as a flange 51, as shown in Fig. 5 for the one mover segment 16A.

According to a preferable embodiment of the present invention, the body part 54 of the mover 16 is made of composite material such as of carbon or glass fibre material. The tension pin 52 or pins 52 may be especially useful for providing support for a mover 16 such as according to this particular embodiment in which the composite material itself, while light, does not provide support against deformation in the same way as, for example, metal or steel structures.

According to another embodiment of the present invention, the mover 16 may be crowned in the direction of the normal force component in order to provide support for the mover 16 in order to minimize the deformation of the mover 16, or particularly the back of the ferromagnetic core 37 of the mover 16 or rotor 16 when looking from the air gap 31, due to the normal force component. The crowning may be implemented, for example, by making the mover 16 wider or thicker at the centre of the mover 16, or at parts susceptible to the bending due to normal force component, relative to the ends or the point(s) at which the mover 16 has been coupled to the elevator car 10.

The specific examples provided in the description given above should not be construed as limiting the applicability and/or the interpretation of the appended claims. Lists and groups of examples provided in the description given above are not exhaustive unless otherwise explicitly stated.

## Claims

1. A mover (16) of an electric linear motor suitable for an elevator (100), **characterized in that** the mover (16) comprises at least one mover segment (16A-16D) coupled to at least one support portion (23) of the mover (16), and wherein the at least one mover segment (16A-16D) comprises a body part (54) and at least one tension pin (52) arranged to extend through the at least one mover segment (16A-16D) and arranged pre-tensioned for providing support against deformation of the mover (16) affecting a magnitude of an air gap (31) between the at least one mover segment (16A-16D) and at least one stator (15; 15A-15D) of the electric linear motor.

2. The mover (16) according to claim 1, wherein said mover segment (16A-16D) comprises two parallel tension pins (52).

3. The mover (16) according to claim 1 or 2, wherein said mover segment (16A-16D) comprises at least one cooling pipe (53) extending through the mover (16) and coupled to the at least one support portion (23).

4. The mover (16) according to any one of the preceding claims, wherein the body part (54) is composite material, such as carbon or glass fibre material.

5. The mover (16) according to claim 3, wherein the mover segment (16A-16D) comprises at least four parallel cooling pipes (53) coupled to two support portions (23) on opposite ends of the mover (16).

6. The mover (16) according to any one of the preceding claims, wherein the mover (16) comprises at least two mover segments (16A-16D) on opposite sides of a stator beam (14), which the stator beam (14) comprises at least two stators (15; 15A-15D) on opposite sides of the stator beam (14) facing said at least two mover segments (16A-16D).

7. The mover (16) according to any one of the preceding claims, wherein the body part (54) of the at least one mover segment (16A-16D) is crowned for providing support against deformation of the mover (16) or a back of a ferromagnetic core (37) of the mover (16).

8. The mover (16) according to any one of the preceding claims, wherein the at least one support portion (23) is a flange (51) to which each one of the mover segments (16A-16D) are coupled to.

9. The mover (16) according to any one of the preceding claims, wherein the mover (16) comprises at least two support portions (23).

10. The mover (16) according to claim 9, wherein said at least two support portions (23) are flanges (51) arranged at first (301) and second (302) ends of the mover (16).

11. The mover (16) according to any one of the preceding claims, wherein the mover (16) comprises at least one unit of electromagnetic components (22) in each one of the mover segments (16A-16D).

12. An elevator (100), **characterized in that** the elevator (100) comprises at least one mover (16) according to any one of the preceding claims, at least one stator beam (14) along which the at least mover (16) is configured to be moved along, wherein the mover (16) is coupled to an elevator car (10) and the stator beam (14) is coupled in fixed manner to an elevator shaft (11) in which the elevator car (10) is arranged to be moved by the electric linear motor.

13. The elevator (100) according to claim 12, comprising at least two movers (16) and at least two stator beams (14), wherein each one of the movers (16) is arranged to be moved along the respective stator beam (14).
